# EUROPÄISCHE PATENTSCHRIFT

(11) **EP 2 692 000 B1**
(45) Veröffentlichungstag und Bekanntmachung des Hinweises auf die Patenterteilung: **30.11.2016**
(21) Anmeldenummer: 12712943.5
(22) Anmeldetag: 24.03.2012
(51) Int. Cl.: H01M 2/10, H01M 2/20

(54) **BATTERIE FÜR EIN KRAFTFAHRZEUG UND ZUGEHÖRIGES HERSTELLUNGSVERFAHREN**
BATTERY FOR A MOTOR VEHICLE AND ASSOCIATED PRODUCTION METHOD
BATTERIE POUR VÉHICULE AUTOMOBILE ET PROCÉDÉ DE PRODUCTION ASSOCIÉ

(30) Priorität: 31.03.2011 DE 102011015620
(43) Veröffentlichungstag der Anmeldung: 05.02.2014
(73) Patentinhaber: Audi AG, 85045 Ingolstadt (DE)
(72) Erfinder: FEES, Heiner, 74321 Bietigheim-Bissingen (DE)
(74) Vertreter: Herbst, Matthias Heinz
(86) Internationale Anmeldenummer: PCT/EP2012/001300
(87) Internationale Veröffentlichungsnummer: WO 2012/130422

(56) Entgegenhaltungen:
- EP-A1- 2 172 994
- WO-A1-2011/033722
- US-A1- 2005 110 458
- US-A1- 2007 188 147
- US-A1- 2008 241 667

## Beschreibung

Die Erfindung betrifft eine Kraftfahrzeug-Batterie mit einer Mehrzahl von Batteriezellen und einer Kontaktiereinrichtung zum elektrischen Koppeln der Batteriezellen mit Anschlüssen, über welche die Batterie an ein Kraftfahrzeug angeschlossen werden kann. Die Erfindung betrifft auch ein Verfahren zum Herstellen einer solchen Batterie.

Ein Kraftfahrzeug, z.B. ein Personenkraftwagen, kann verschiedene Typen von Batterien aufweisen, beispielsweise eine Starter-Batterie oder eine Hochvolt-Traktionsbatterie. Im Zusammenhang mit der Erfindung ist mit dem Begriff Batterie ein Batterie beliebigen Typs gemeint. Unter einer Batterie wird auch eine wiederaufladbare Batterie, d.h. ein Akkumulator, verstanden.

Die Erzeugung von elektrischer Energie erfolgt in einer Batterie durch eine oder mehrere galvanischen Zellen. Eine solche galvanische Zelle kann innerhalb der Batterie in einem in sich geschlossenen Behältnis bereitgestellt sein, das vorliegend als Batteriezelle bezeichnet wird. Bei der Herstellung einer Batterie werden eine oder mehrere solcher Batteriezellen in einem Gehäuse der Batterie angeordnet und über elektrische Leiter miteinander verschaltet, so dass den Batteriezellen elektrische Energie entnommen und über Anschlusselemente einer Anschlusseinrichtung der Batterie einem Stromkreis des Kraftfahrzeugs, z.B. einem Bordnetz, zugeführt werden bzw. von dort in die Batteriezellen eingespeist werden kann.

In diesem Zusammenhang ist aus der WO 2011/033722 A1 ein Batteriepack mit Batteriezellen in Zylinderform bekannt, bei welchem die negativen Elektrodenanschlüsse der Batteriezellen, nämlich die Zellenbecher, elektrisch miteinander über eine negative Elektrodenverbindungsplatte verbunden sind. Eine positive Elektrodenverbindungsplatte ist über einer Isolationsplatte an der negativen Elektrodenverbindungsplatte vorgesehen, wobei die positive Elektrodenverbindungsplatte, die Isolationsplatte und die negative Elektrodenverbindungsplatte Durchgangslöcher aufweisen, so dass die obere Fläche eines jeden Verschlussbleches der jeweiligen Batteriezelle freigelegt ist. Die positive Elektrodenverbindungsplatte ist mit den positiven Elektrodenanschlüssen der Batteriezellen, nämlich den Verschlussblechen, mittels positiver Elektrodenverbindungselemente verbunden.

Eine Batterie muss in einem Massenfertigungsprozess kostengünstig und dennoch mit hoher Zuverlässigkeit fehlerfrei herstellbar sein.

Die US 2008/241667 A1 offenbart eine Mehrzahl von achsparallel nebeneinander angeordneten Batteriezellen für ein Fahrzeug, wobei alle Batterien aufrecht auf einer Bodenplatte stehen. Eine Deckelplatte dient zur elektrischen Kontaktierung der Pole von oben und eine Bodenplatte zur elektrischen Kontaktierung der Pole von unten.

Es ist Aufgabe der vorliegenden Erfindung, eine einfache und kostengünstige Herstellung einer Batterie für ein Kraftfahrzeug zu ermöglichen.

Die Aufgabe wird durch eine Batterie gemäß Anspruch 1 und ein Verfahren gemäß Anspruch 9 gelöst. Vorteilhafte Weiterbildungen der Erfindung sind durch die Unteransprüche gegeben.

Gemäß der Erfindung wird die gattungsgemäße Batterie, bei welcher die Kontaktiereinrichtung ein erstes und ein zweites plattenförmiges elektrisches Leitelement umfasst, von denen sich jedes von der Batterieanschlusseinrichtung, d.h. zumindest einem Anschluss der Batterie, zu jeder der Batteriezellen hin erstreckt, dahingehend weitergebildet, dass die beiden Leitelemente über eine elektrisch isolierende Schicht, die durch eine geklebte Folie oder eine Laminierfolie gebildet ist, miteinander zu einem einzigen Bauteil verbunden sind, wobei die Kontaktiereinrichtung zumindest eine Aussparung aufweist und zumindest eines der Leitelemente über einen Draht, der durch die Aussparung geführt ist, mit einem Anschlusspol einer der Batteriezellen elektrisch verbunden ist. Bei den plattenförmigen Leitelementen kann es sich beispielsweise um einfache Platten aus Metall handeln, die auf die Batteriezellen aufgelegt sind. Die beiden Leitelemente sind bei der erfindungsgemäßen Batterie über eine elektrisch isolierende Schicht miteinander verbunden.

Die erfindungsgemäße Batterie weist den Vorteil auf, dass durch einfaches Aufsetzen der Kontaktiereinrichtung mit ihren beiden plattenförmigen Leitelementen auf die Batteriezellen in einem einzigen Montageschritt diejenigen elektrische Verbindungselemente bereitgestellt sind, die zum elektrischen Koppeln der einzelnen Batteriezellen mit der Batterieanschlusseinrichtung nötig sind.

Entsprechend umfasst das erfindungsgemäße Verfahren zum Herstellen einer erfindungsgemäßen Batterie die Schritte:
- Herstellen der Kontaktiereinrichtung mittels eines Laminierverfahrens zum Verbinden der Leitelemente mit einer elektrisch isolierenden Folie,
- Bereitstellen der Batteriezellen,
- Anordnen der Kontaktiereinrichtung an den Batteriezellen und,
- Elektrisches Verbinden der Leitelemente mit Anschlusspolen (Plus- und Minus-Pol) der Batteriezellen.

Die Leitelemente der Kontaktiereinrichtung sind durch die isolierende Schicht miteinander verbunden, d.h. sie bilden ein einziges Bauteil. Dadurch müssen die Leitelemente bei der Montage der Batterie nicht einzeln gegeneinander ausgerichtet werden. So kann die Fertigungsdauer verkürzt werden, ohne dass dies zu Lasten der Fertigungsgenauigkeit ginge. Auch ist durch die fest verbundene Isolierschicht ein versehentliches Kurzschließen der beiden Leitelemente wirksam vermieden.

Insgesamt ist damit eine schnelle und mit wenigen Arbeitsschritten zu bewerkstelligende Montage der Batterie ermöglicht.

Zum elektrischen Verbinden der plattenförmigen Leitelemente mit den einzelnen Batteriezellen ist gemäß einer Weiterbildung des erfindungsgemäßen Verfahrens vorgesehen, dass zumindest eines der Leitelemente mittels eines Bonding-Verfahrens oder mittels eines Löt- oder Schweißverfahrens, insbesondere eines Laserschweißverfahrens, mit den Anschlusspolen der Batteriezellen verbunden wird. Mittels dieser Verfahren lassen sich elektrische Verbindungen automatisiert und in besonders kurzer Zeit herstellen.

Bei der erfindungsgemäßen Batterie ist die elektrisch isolierende Schicht zwischen den Leitelementen durch eine geklebte Folie oder eine Laminierfolie gebildet. Gemäß dem erfindungsgemäßen Verfahren wird die Kontaktiereinrichtung mittels eines Laminierverfahrens zum Verbinden der beiden Leitelemente mit einer elektrisch isolierenden Folie hergestellt. Durch Kleben bzw. Laminieren kann eine zuverlässig isolierende Schicht in kurzer Zeit und besonders kostengünstig bereitgestellt werden.

Bei der erfindungsgemäßen Batterie weist die Kontaktiereinrichtung zumindest eine Aussparung auf. Zumindest eines der Leitelemente ist dabei über einen Draht, der durch die Aussparung geführt ist, mit einem Anschlusspol einer der Batteriezellen elektrisch verbunden. Aufgrund der Aussparung kann das Leitelement nach dem Aufsetzen der Kontaktiereinrichtung von der den Batteriezellen abgewandten Seite der Kontaktiereinrichtung durch die Aussparung hindurch mit dem Anschlusspol verdrahtet werden. Sowohl die Kontaktstellen auf dem Anschlusspol als auch diejenigen auf dem Leitelement sind so für ein Werkzeug einer automatisierten Fertigungsanlage von derselben Seite zugänglich, wodurch besonders kurze Verfahrwege des Werkzeugs gegeben sind. Das Verdrahten kann beispielsweise durch ein Bonding-Verfahren geschehen.

Eine Kontaktiereinrichtung mit entsprechenden Aussparungen kann besonders leicht bereitgestellt werden, wenn zumindest eines der Leitelemente der Kontaktiereinrichtung aus einer gelochten Platte oder einer kammförmigen Platte gebildet ist.

Beim Anordnen der Kontaktiereinrichtung an den Batteriezellen kann eines der Leitelemente der Kontaktiereinrichtung auf den Batteriezellen aufgelegt werden. Im Zusammenhang mit diesem Leitelement, das sich auf der den Batteriezellen zugewandten Seite der Kontaktiereinrichtung befindet, ist in einer vorteilhaften Weiterbildung der erfindungsgemäßen Batterie vorgesehen, dass die Kontaktiereinrichtung zumindest einen Kontaktbereich aufweist, in welchem das Leitelement einen Anschlusspol einer der Batteriezellen berührt. Dann erübrigt sich das Verdrahten dieses Leitelements mit dem Anschlusspol.

Besonders vorteilhaft ist es dabei, wenn zumindest ein Teil des Kontaktbereichs durch eine Aussparung der Kontaktiereinrichtung hindurch von einer den Batteriezellen abgewandten Seite der Kontaktiereinrichtung erreichbar ist. Dann kann das den Anschlusspol berührende Leitelement beispielsweise mittels Laserschweißens mit dem Anschlusspol dauerhaft verbunden werden.

Eine andere vorteilhafte Weiterbildung der erfindungsgemäßen Batterie sieht vor, dass die Kontaktiereinrichtung zumindest bereichsweise eine isolierende äußere Schicht aufweist. Dadurch ist ein ungewollter Stromfluss über andere elektrisch leitende Elemente der Batterie, wie z.B. Schrauben, vermieden.

Bevorzugt handelt es sich bei den die Batteriezellen um Rundzellen. Bei einer Rundzelle können auf ein und derselben Stirnseite die beiden nötigen Anschlusspole (Plus-Pol und Minus-Pol) bereitgestellt sein, so dass nach dem Anordnen der Kontaktiereinrichtung auf den Rundzellen nur noch ein sehr geringer Abstand zwischen den Anschlusspolen und den Leitelement verbleibt, der mittels eines Drahts überbrückt werden muss. Daher lassen sich Rundzellen besonders einfach über die Kontaktiereinrichtung mit der Batterieanschlusseinrichtung koppeln.

Eine andere Weiterbildung der erfindungsgemäßen Batterie sieht vor, dass die Batteriezellen mittels einer von der Kontaktiereinrichtung verschiedenen Halteeinrichtung in einem Gehäuse der Batterie gehalten sind. Dadurch ergibt sich der Vorteil, dass über die Kontaktiereinrichtung keine Kraft auf die Batteriezellen ausgeübt werden muss, um die Batteriezellen in dem Gehäuse zu fixieren. Dadurch lässt sich die Kontaktiereinrichtung mit besonders einfachen Mitteln in dem Gehäuse befestigen.

Die Kontaktiereinrichtung ist gemäß einer anderen Weiterbildung der erfindungsgemäßen Batterie auf Kunststoffstifte aufgesteckt und durch diese gehalten. Durch Verstemmen der Stifte ist eine mit geringem Aufwand herstellbare Verbindung der Kontaktiereinrichtung mit einer anderen Komponente der Batterie ermöglicht.

Die Erfindung wird im Folgenden anhand von Ausführungsbeispielen näher erläutert. Dazu zeigt:
- Fig. 1: eine perspektivische Darstellung einer Batterie gemäß einer Ausführungsform der erfindungsgemäßen Batterie während der Montage;
- Fig. 2: eine perspektivische Darstellung der Batterie aus Fig. 1, nachdem in einem Montageschritt ein Leitungsbus hinzugefügt wurde;
- Fig. 3: eine schematische Darstellung einer fertig montierten Batterie gemäß einer anderen Ausführungsform der Erfindung in einer Schnittansicht.

Die Ausführungsbeispiele stellen bevorzugte Ausführungsformen der Erfindung dar.

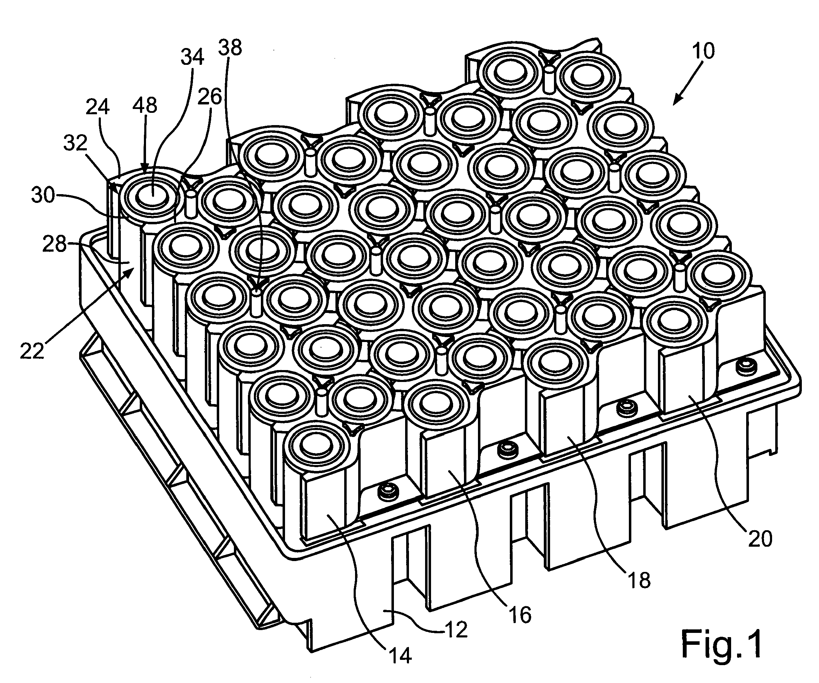

In Fig. 1 ist eine Batterie 10 für einen Personenkraftwagen dargestellt. Das in Fig. 1 dargestellte Beispiel zeigt die Batterie 10 während einer Montage derselben. Die Batterie 10 ist noch nicht vollständig zusammengebaut. In einen Gehäuseboden 12 sind Magazine 14, 16, 18, 20 eingesetzt, von denen jedes elf Rundzellen trägt. In Fig. 1 ist der Übersichtlichkeit halber nur eine einzelne Rundzelle 22 mit einem Bezugszeichen versehen. Genauso sind nur Komponenten der Rundzelle 22 mit einem Bezugszeichen versehen. Die übrigen Rundzellen weisen entsprechende Komponenten auf.

Der Gehäuseboden 12 und die Magazine 14 bis 20 bestehen aus einem Kunststoff. Durch die Magazine 14 bis 20 sind die Rundzellen in dem Gehäuseboden 12 achsparallel nebeneinander angeordnet.

Das Magazin 14 fixiert die Rundzelle 22 in der Batterie 10. Die Rundzelle 22 ist dazu durch elastische Wände 24, 26 des Magazins 14 in einer Schnappverbindung gehalten. Ein Zellenbecher 28 der Rundzelle 22 weist eine Ringnut 30 auf, in die ein Steg 32 des Magazins 14 greift. Durch den Steg 32 ist die Rundzelle 22 gegen ein Herausrutschen aus dem Magazin 14 entlang einer Längsachse der Rundzelle 22 gesichert.

Der Zellenbecher 28 ist aus einem elektrisch leitenden Material und bildet einen Minus-Pol der Rundzelle 22. Ein metallener Deckel 34 der Rundzelle 22 bildet einen Plus-Pol. In der Batterie 10 sind Stirnseiten der Rundzellen mit den beiden Anschlusspolen (Deckel und in Fig. 1 oberer Rand der Zellenbecher) in einer gemeinsamen Ebene angeordnet.

In einem weiteren Schritt der Montage werden die einzelnen Rundzellen zu einer Parallelschaltung verschaltet. Dazu werden die Plus-Pole aller Rundzellen einerseits und andererseits deren Minus-Pole miteinander elektrisch verbunden.

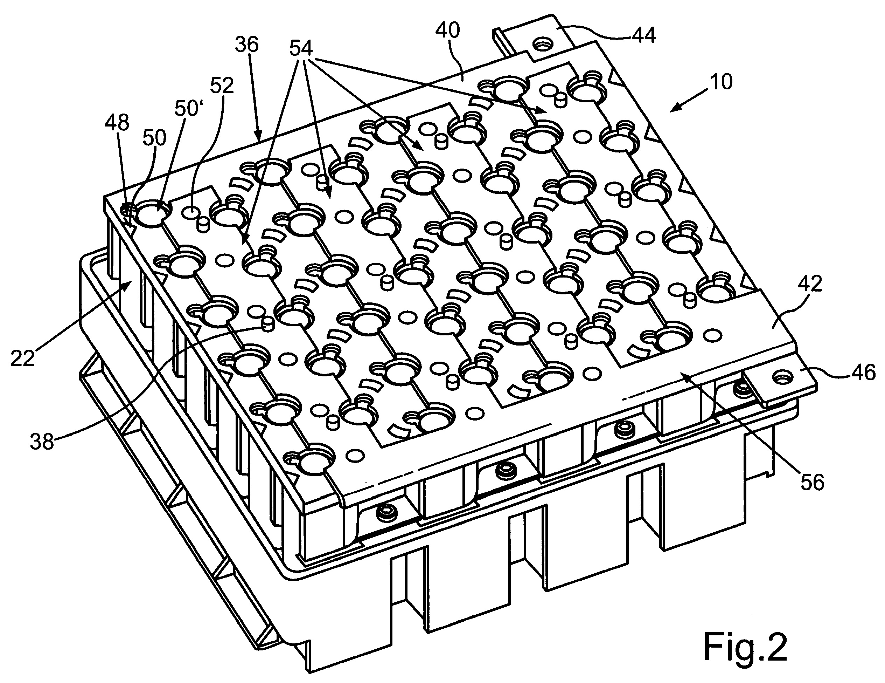

Dieser weitere Montageschritt wird im Folgenden anhand der Fig. 1 und 2 erläutert.

Die Magazine 14 bis 20 weisen Stifte zum Aufstecken eines Leitungsbusses 36 auf. In den Fig. 1 und 2 ist der Übersichtlichkeit halber nur ein Stift 38 mit einem Bezugszeichen versehen. Nach dem Aufstecken des Leitungsbusses 36 ist der Stift 38 (wie auch die anderen Stifte) verstemmt worden, d.h. er ist dauerhaft plastisch verformt. Dadurch ist der Leitungsbus 36 fest mit den Magazinen 14 bis 20 verbunden.

Der Leitungsbus 36 weist eine rechteckige gelochte Platte 40 auf, die aus einem elektrisch leitenden Material besteht. Mit der Platte 40 ist eine zweite elektrisch leitenden Platte 42 verbunden. Die Platten 40 und 42 sind von elektrisch isolierenden Folien umgeben, die mittels eines Laminierverfahrens an den Platten 40, 42 befestigt sind. Eine weitere Folie befindet sich zwischen den beiden Platten 40, 42, so dass diese gegeneinander elektrisch isoliert sind.

Die Platte 40 weist einen Flansch 44 auf, an dem die isolierende Folie entfernt ist. Der Flansch 44 bildet einen Minus-Pol der Batterie 10. Ein Flansch 46 der Platte 42 bildet einen Plus-Pol der Batterie. Mittels der beiden Flansche 44 und 46 kann die Batterie 10 in einem Personenkraftwagen an das Bordnetz desselben angeschlossen werden.

Um einen Strom von der Platte 40 in die Rundzelle 22 (oder aus ihr heraus) zu leiten, ist die Platte 40 mit einem oberen Rand 48 des Zellbechers 28 über einen (nicht dargestellten) Draht elektrisch verbunden. Der Draht ist an der Platte 40 in einem Kontaktierungsbereich 50 befestigt, in dem die isolierende Folie von der Platte 40 entfernt ist. Der Draht ist durch eine Durchgangsöffnung 50' der Platte 40 geführt. Der Draht wurde am Kontaktierungsbereich 50 und am Rand 48 des Zellbechers 28 mittels eines Bonding-Verfahrens in einem automatisierten Montageschritt befestigt. Um den Rand 48 einfach erreichen zu können, ist die Durchgangsöffnung 50' derart ausgestaltet, dass der Rand 48 in einer Draufsicht auf die Stirnseite der Rundzelle 22, d.h. in Fig. 1 senkrecht von oben auf den Deckel 34 und den Rand 48, bei aufgesetztem Leitungsbus 36 durch die Durchgangsöffnung 50' hindurch sichtbar ist.

Der Draht kann als elektrische Sicherung ausgelegt sein. Für den Fall, dass ein elektrischer Strom der Rundzelle 22, der über den Draht fließt, einen vorbestimmten, sicherheitskritischen Stromstärkewert überschreitet, schmilzt der Draht, wodurch der Stromfluss unterbrochen wird. Dadurch wird eine Beschädigung der Rundzelle 22 oder eines anderen Bauteils im Personenkraftwagen vermieden.

In Fig. 2 sind weitere Kontaktierungsbereiche der Platte 40 ähnlich dem Kontaktierungsbereich 50 gezeigt, die der Übersichtlichkeit halber aber nicht mit einem Bezugszeichen versehen sind.

Die Platte 42 weist ebenfalls Kontaktierungsbereiche auf, von denen in Fig. 2 nur ein Kontaktierungsbereich 52 mit einem Bezugszeichen versehen ist. In den Kontaktierungsbereichen der Platte 42 ist die isolierende Folie von der Platte 42 entfernt worden. In dem Kontaktierungsbereich 52 ist ein (nicht dargestellter) Draht mit der Platte 42 mittels eines Bonding-Verfahrens verbunden worden. Der Draht ist an seinem anderen Ende mit dem Deckel 34 der Rundzelle 22 verbunden. Auch dieser Draht ist durch die Durchgangsöffnung 50' geführt. Der Draht kann ebenfalls als Sicherung ausgelegt sein.

In gleicher Weise wie die Rundzelle 22 sind auch die übrigen Rundzellen an die Platten 40 und 42 angeschlossen.

In dem Leitungsbus 36 wird bei einem Betrieb der Batterie 10 während einer Leistungsentnahme aus der Batterie 10 ein verhältnismäßig großer Sammelstrom aus einzelnen, aus den Rundzellen entnommenen Teilströmen gebildet und an das Bordnetz abgegeben. In einem Ladebetrieb der Batterie 10 wird ein großer Ladestrom auf die einzelnen Rundzellen verteilt.

Bei der Leistungsentnahme wirkt die Platte 40 als elektrisches Leitelement, über welche ein Strom vom Flansch 44 zu den einzelnen Rundzellen der Batterie 10 geführt ist. Über die Platte 42 ist ein Strom von den einzelnen Rundzellen zum Flansch 46 geführt. Der elektrische Strom fließt dabei über die Plus-Pole der Rundzellen, d.h. ihre Deckel, über einzelne, den Zinken der Kammform der Platte 42 entsprechende Fortsätze 54 der Platte 42 in einen Sammelbereich 56 der Platte 42. Von dort fließt der Sammelstrom über den Flansch 46 in das Bordnetz des Personenkraftwagens und tritt dann über den Flansch 44 in die Platte 40 ein. In der Platte 40 wird er auf die einzelnen Minus-Pole der Rundzellen, d.h. die Zellenbecher, verteilt. Im Falle der Platte 42 stellen die Bereiche zwischen den Fortsätzen 54 Durchgangsöffnungen der Platte 42 dar, durch die hindurch die Drähte von den Kontaktierungsbereichen der Platte 42 zu den einzelnen Rundzellen geführt sind.

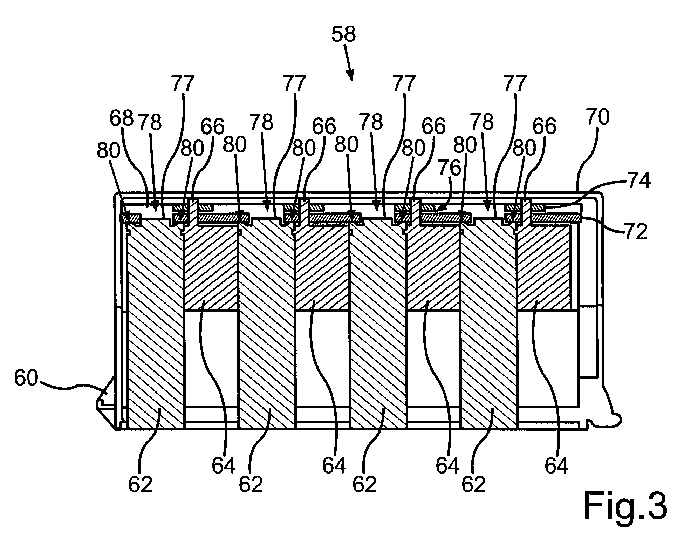

In Fig. 3 ist eine weitere Batterie 58 in einer Schnittansicht gezeigt.

In einem Gehäuseboden 60 sind Rundzellen 62 von Magazinen 64 gehalten. Die Rundzellen 62 entsprechen in ihrer Bauweise derjenigen der Rundzelle 22. Die Magazine 64 sind in ihrem Aufbau mit dem Magazin 14 identisch. Stifte 66 der Magazine 64 halten einen Leitungsbus 68. Die Batterie 58 ist mit einem Gehäusedeckel 70 verschlossen.

Der Leitungsbus 68 weist eine gelochte Platte 72 und eine kammförmige Platte 74 auf. Die beiden Platten 72, 74 sind aus einem elektrisch leitenden Material gefertigt. Die Platte 72 entspricht in ihrer Bauform der Platte 40, die Platte 74 der Platte 42. Zwischen den Platten 72, 74 befindet sich eine elektrisch isolierende Folie 76, durch welche die beiden Platten 72, 74 zusammengehalten und gegeneinander elektrisch isoliert sind. Weitere elektrisch isolierende Folien umgeben die Platten 72, 74 nach außen hin. Die Folien sind mittels eines Laminierverfahrens mit den Platten 72, 74 verbunden worden.

Die Platte 74 ist, ähnlich wie die Platte 42 im Falle der Batterie 10, über (nicht dargestellte) Drähte mit Deckeln 77 der Rundzellen 62, d.h. deren Plus-Polen, verbunden. Die Drähte sind dabei durch Durchgangsöffnungen 78 in der Platte 72 geführt. Im Unterschied zur Platte 40 der Batterie 10 weist die Platte 72 an ihrer in Fig. 3 unteren Seite Kontaktierungsbereiche auf, in denen die Folie entfernt ist. Diese Kontaktierungsbereiche der Platte 72 berühren obere Ränder 80 von Zellenbechern der Rundzellen 62. Bei der Herstellung der Batterie 58 wurde die Platte 72 mittels Laserschweißens mit den Zellenbechern an Berührpunkten der Platte 72 mit den oberen Rändern 80 verbunden. Dazu wurde ein Laserstrahl von in Fig. 3 oben her durch die Durchgangsöffnungen 78 hindurch auf die oberen Ränder 80 der Zellenbecher und auf diese berührende Kanten der Platte 72 gerichtet.

Durch die Beispiele ist gezeigt, wie eine einfache und kostengünstige Herstellung der Batterie 10 und 58 ermöglicht ist.

## Patentansprüche

1. Batterie (10, 58) für ein Kraftfahrzeug, mit einer Batterieanschlusseinrichtung (44, 46) zum Anschließen der Batterie (10, 58) an das Kraftfahrzeug, einer Mehrzahl von Batteriezellen (22, 62) und einer Kontaktiereinrichtung (36, 68) zum elektrischen Koppeln der Batteriezellen (22, 62) mit der Anschlusseinrichtung (44, 46), wobei die Kontaktiereinrichtung (36, 68) ein erstes (40, 72) und ein zweites (42, 74) plattenförmiges elektrisches Leitelement (40, 42, 72, 74) aufweist, von denen sich jedes von der Batterieanschlusseinrichtung (44, 46) zu jeder der Batteriezellen (22, 62), deren Plus- und Minus-Pol mit den Leitelementen (40, 42, 72, 74) elektrisch verbunden ist, hin erstreckt,
**dadurch gekennzeichnet, dass**
die beiden Leitelemente (40, 42, 72, 74) über eine elektrisch isolierende Schicht (76), die durch eine geklebte Folie oder eine Laminierfolie gebildet ist, miteinander zu einem einzigen Bauteil verbunden sind, wobei die Kontaktiereinrichtung (36, 68) zumindest eine Aussparung (50', 78) aufweist und zumindest eines der Leitelemente (40, 42, 74) über einen Draht, der durch die Aussparung (50', 78) geführt ist, mit einem Anschlusspol (34, 48) einer der Batteriezellen (22, 62) elektrisch verbunden ist.

2. Batterie nach Anspruch 1, bei welcher die Kontaktiereinrichtung (68) zumindest einen Kontaktbereich aufweist, in welchem eines der Leitelemente (72) einen Anschlusspol (80) einer der Batteriezellen (62) berührt.

3. Batterie nach Anspruch 2, wobei zumindest ein Teil des Kontaktbereichs durch eine Aussparung (78) der Kontaktiereinrichtung (68) hindurch von einer den Batteriezellen (62) abgewandten Seite der Kontaktiereinrichtung (68) erreichbar ist.

4. Batterie nach einem der vorhergehenden Ansprüche, bei welcher zumindest eines der Leitelemente (40, 72) aus einer gelochten Platte oder einer kammförmigen Platte (42, 74) gebildet ist.

5. Batterie nach einem der vorhergehenden Ansprüche, bei welcher die Kontaktiereinrichtung (36, 68) zumindest bereichsweise eine isolierende äußere Schicht aufweist.

6. Batterie nach einem der vorhergehenden Ansprüche, bei welcher die Batteriezellen (22, 62) Rundzellen sind.

7. Batterie nach einem der vorhergehenden Ansprüche, bei welcher die Batteriezellen (22, 62) mittels einer von der Kontaktiereinrichtung (36, 68) verschiedenen Halteeinrichtung (14 bis 20, 64) in einem Gehäuse (12, 60) der Batterie (10, 58) gehalten sind.

8. Batterie nach einem der vorhergehenden Ansprüche, bei welcher die Kontaktiereinrichtung (36, 68) auf Kunststoffstifte (38, 66) aufgesteckt und durch diese gehalten ist.

9. Verfahren zum Herstellen einer Batterie (10, 58) gemäß einem der vorhergehenden Ansprüche, mit den Schritten:
- Herstellen der Kontaktiereinrichtung (36, 68) mittels eines Laminierverfahrens zum Verbinden der Leitelemente (40, 42, 72, 74) mit einer elektrisch isolierenden Folie (76);
- Bereitstellen der Batteriezellen (22, 62);
- Anordnen der Kontaktiereinrichtung (3,6, 68) an den Batteriezellen (22, 62);
- Elektrisches Verbinden der Leitelemente (40, 42, 72, 74) mit Anschlusspolen (34, 48, 80) der Batteriezellen.

10. Verfahren nach Anspruch 9, bei welchem zumindest eines der Leitelemente (40, 42, 72, 74) mittels eines Bondingverfahrens oder mittels eines Schweiß- oder Lötverfahrens mit den Anschlusspolen (34, 48, 80) verbunden wird.

## Claims

1. Battery (10, 58) for a vehicle having a battery connection device (44, 46) for connecting the battery (10, 58) to the vehicle, a plurality of battery cells (22, 62) and a contacting device (36, 68) for electrically coupling the battery cells (22, 62) to the connection device (44, 46), wherein the contacting device (36, 68) has a first (40,72) and a second (42, 74) plate-shaped electrical conductive element (40, 42, 72, 74), of which each extends from the battery connection device (44, 46) to each of the battery cells (22, 62), the plus and minus pole of which is electrically connected to the conductive elements (40, 42, 72, 74), **characterised in that** the two conductive elements (40,42, 72, 74) are connected via an electrically insulating layer (76), which is formed by an adhered film or a laminating film, to each other to form a single component, wherein the contacting device (36, 68) has at least one recess (50', 78) and at least one of the conductive elements (40, 42, 74) is electrically connected to a connection pole (34, 48) of one of the battery cells (22, 62) via a wire which is led through the recess (50', 78).

2. Battery according to Claim 1, in the case of which the contacting device (68) has at least one contact region in which one of the conductive elements (72) contacts a connection pole (80) of one of the battery cells (62).

3. Battery according to Claim 2, wherein at least one part of the contact region is reachable through a recess (78) of the contacting device (68) from a side of the contacting device (68) facing away from the battery cells (62).

4. Battery according to any one of the preceding claims, in the case of which at least one of the conductive elements (40, 72) is formed from a perforated plate or a comb-shaped plate (42, 74).

5. Battery according to any one of the preceding claims, in the case of which the contacting device (36, 68) has an insulating external layer at least in regions.

6. Battery according to any one of the preceding claims, in the case of which the battery cells (22, 62) are round cells.

7. Battery according to any one of the preceding claims, in the case of which the battery cells (22, 62) are held in a housing (12, 60) of the battery (10, 58) by means of a holding device (14 to 20, 64) different from the contacting device (36, 68).

8. Battery according to any one of the preceding claims, in the case of which the contacting device (36, 68) is placed on plastic pins (38, 66) and is held by the same.

9. Method for manufacturing a battery (10, 58) according to any one of the preceding claims, having the steps of:
- manufacturing the contacting device (36, 68) by means of a laminating process in order to connect the conductive elements (40, 42, 72, 74) to an electrically insulating film (76);
- preparing the battery cells (22, 62);
- arranging the contacting device (36, 68) on the battery cells (22, 62);
- electrically connecting the conductive elements (40, 42, 72, 74) to connection poles (34, 48, 80) of the battery cells.

10. Method according to Claim 9, in the case of which at least one of the conductive elements (40, 42, 72, 74) is connected by means of a bonding process or by means of a welding or soldering process to the connection poles (34, 48, 80).

## Revendications

1. Batterie (10, 58) pour un véhicule automobile, comprenant un dispositif de raccordement de batterie (44, 46) servant à raccorder la batterie (10, 58) au véhicule automobile, une multitude de cellules de batterie (22, 62) et un dispositif de mise en contact (36, 68) servant à coupler de manière électrique des cellules de batterie (22, 62) au dispositif de raccordement (44, 46),
le dispositif de mise en contact (36, 68) présentant un premier (40, 72) et un deuxième (42, 74) élément conducteur électrique (40, 42, 72, 74) en forme de plaque, parmi lesquels chacun s'étend du dispositif de raccordement de batterie (44, 46) à chacune des cellules de batterie (22, 62), dont le pôle plus et le pôle moins sont reliés de manière électrique aux éléments conducteurs (40, 42, 72, 74),
**caractérisée en ce**
**que** les deux éléments conducteurs (40, 42, 72, 74) sont reliés l'un à l'autre en un unique composant par l'intermédiaire d'une couche électriquement isolante (76), qui est formée par une feuille collée ou par une feuille laminée, le dispositif de mise en contact (36, 68) présentant au moins un évidement (50', 78) et au moins un des éléments conducteurs (40, 42, 74) étant relié de manière électrique par l'intermédiaire d'un fil, qui est guidé à travers l'évidement (50', 78), à un pôle de raccordement (34, 48) de l'une des cellules de batterie (22, 62).

2. Batterie selon la revendication 1, dans laquelle le dispositif de mise en contact (68) comporte au moins une zone de contact, dans laquelle l'un des éléments conducteurs (72) touche un pôle de raccordement (80) de l'une des cellules de batterie (62).

3. Batterie selon la revendication 2, dans laquelle au moins une partie de la zone de contact peut être atteinte à travers un évidement (78) du dispositif de mise en contact (68) par un côté, éloigné des cellules de batterie (62), du dispositif de mise en contact (68).

4. Batterie selon l'une quelconque des revendications précédentes, dans laquelle au moins l'un des éléments conducteurs (40, 72) est formé à partir d'une plaque trouée ou d'une plaque (42, 74) en forme de peigne.

5. Batterie selon l'une quelconque des revendications précédentes, dans laquelle le dispositif de mise en contact (36, 68) présente au moins par endroits une couche extérieure isolante.

6. Batterie selon l'une quelconque des revendications précédentes, dans laquelle les cellules de batterie (22, 62) sont des cellules rondes.

7. Batterie selon l'une quelconque des revendications précédentes, dans laquelle les cellules de batterie (22, 62) sont maintenues dans un carter (12, 60) de la batterie (10, 58) au moyen d'un dispositif de maintien (14 à 20, 64) différent du dispositif de mise en contact (36, 68).

8. Batterie selon l'une quelconque des revendications précédentes, dans laquelle le dispositif de mise en contact (36, 68) est emboîté sur des broches en plastique (38, 66) et maintenu par celles-ci.

9. Procédé pour la fabrication d'une batterie (10, 58) selon l'une quelconque des revendications précédentes, comprenant les étapes suivantes :
- la fabrication du dispositif de mise en contact (36, 68) au moyen d'un procédé de laminage pour assembler les éléments conducteurs (40,42, 72, 74) à une feuille électriquement isolante (76) ;
- la préparation des cellules de batterie (22, 62) ;
- la disposition du dispositif de mise en contact (36, 68) au niveau des cellules de batterie (22, 62) ;
- la liaison électrique des éléments conducteurs (40, 42, 72, 74) à des pôles de raccordement (34, 48, 80) des cellules de batterie.

10. Procédé selon la revendication 9, dans lequel au moins l'un des éléments conducteurs (40, 42, 72, 74) est relié aux pôles de raccordement (34, 48, 80) au moyen d'un procédé de liaison ou au moyen d'un procédé de soudage ou de brasage.
